(19) Europäisches Patentamt
European Patent Office
Office européen des brevets

(11) **EP 3 654 566 B1**

(12) **EUROPEAN PATENT SPECIFICATION**

(45) Date of publication and mention
of the grant of the patent:
**31.05.2023 Bulletin 2023/22**

(21) Application number: **18841695.2**

(22) Date of filing: **03.08.2018**

(51) International Patent Classification (IPC):
*H04L 5/00* (2006.01)        *H04W 52/14* (2009.01)
*H04W 52/48* (2009.01)       *H04W 52/32* (2009.01)
*H04W 52/20* (2009.01)       *H04W 72/04* (2023.01)

(52) Cooperative Patent Classification (CPC):
**H04W 52/48; H04L 5/0055; H04W 52/146;
H04W 52/20; H04W 52/325**

(86) International application number:
**PCT/CN2018/098572**

(87) International publication number:
**WO 2019/024927 (07.02.2019 Gazette 2019/06)**

(54) **METHOD AND APPARATUS FOR TRANSMITTING UPLINK CONTROL INFORMATION**

VERFAHREN UND VORRICHTUNG ZUR ÜBERTRAGUNG VON
UPLINK-STEUERINFORMATIONEN

PROCÉDÉ ET APPAREIL DE TRANSMISSION D'INFORMATIONS DE COMMANDE DE LIAISON
MONTANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.08.2017  CN 201710657028**

(43) Date of publication of application:
**20.05.2020  Bulletin 2020/21**

(73) Proprietor: **Huawei Technologies Co., Ltd.
Longgang District
Shenzhen, Guangdong 518129 (CN)**

(72) Inventors:
• **SU, Liyan
  Shenzhen
  Guangdong 518129 (CN)**
• **GUAN, Lei
  Shenzhen
  Guangdong 518129 (CN)**
• **MA, Sha
  Shenzhen
  Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
WO-A2-2014/021753        CN-A- 1 477 888
CN-A- 103 929 800        US-A1- 2015 036 668
US-A1- 2015 141 070

• **LG ELECTRONICS: "Discussion on UL transmit
power control for NR", 3GPP DRAFT; R1-1700492
NR_UL-PC_FINAL, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no. Spokane,
USA; 20170116 - 20170120 16 January 2017
(2017-01-16), XP051208023, Retrieved from the
Internet:
URL:http://www.3gpp.org/ftp/Meetings_3GPP_
SYNC/RAN1/Docs/ [retrieved on 2017-01-16]**

## Description

### TECHNICAL FIELD

This application relates to the communications field, and in particular, to a method and an apparatus for transmitting uplink control information in the communications field.

### BACKGROUND

A dynamic scheduling technology is used in a release 8/9/10 (Release 8/9/10, "Rel-8/9/10" for short) long term evolution (Long Term Evolution, LTE) communications system, to improve performance of the communications system. To be specific, a network device, for example, an evolved NodeB (evolved NodeB, eNB) in LTE performs scheduling and allocates a resource based on a channel status of each terminal device (also called user equipment, UE), so that each scheduled user equipment performs transmission on an optimal channel thereof. Before downlink data is transmitted, the network device needs to transmit downlink control information (downlink control information, DCI) to a terminal device in first several symbols of a transmission time interval, to notify of scheduling information of a current data transmission, including a used time-frequency resource, a modulation and coding scheme, and the like. After blindly detecting the DCI, the terminal device correctly receives and demodulates the downlink data based on the indicated information such as the time-frequency resource and the modulation and coding scheme.

An error rate of demodulating the downlink data by the terminal device is denoted as $P_e$, and is related to a resource allocated by the network device to the terminal device. More allocated resources indicate a smaller error rate. To reach a compromise between an error rate of a single downlink data transmission and system resource utilization, an existing LTE standard specifies that an error rate $P_e$ of each downlink transmission of the network device is 10%.

After demodulating the downlink data, the terminal device checks whether the downlink data is correct. If the check succeeds, the terminal device transmits an acknowledgment (acknowledgement, ACK) instruction to the network device; and if the check fails, the terminal device transmits a negative acknowledgment (negative acknowledgement, NACK) instruction to the network device. Both the acknowledgment instruction and the negative acknowledgment instruction are carried on a physical uplink control channel (physical uplink control channel, PUCCH) pre-agreed on with the network device. Similarly, ACK information and NACK information also have a problem of correctness. A probability that the network device incorrectly demodulates NACK information uploaded by the terminal device into ACK is denoted as $P_{N2A}$, and the existing LTE standard specifies that $P_{N2A}$= 0.1%.

$P_e$ and $P_{N2A}$ jointly determine a probability of a successful downlink data transmission. In a fifth-generation (5th generation, 5G) mobile communications system, an ultra-reliable low-latency communication (Ultra-Reliable Low-Latency Communication, URLLC) service type is introduced. A transmission success probability required by the service reaches 99.999%, in other words, a data transmission error rate is less than 10E-5. If $P_e$ and $P_{N2A}$ specified in the existing LTE system are used, a high-reliability requirement of a URLLC service cannot be met.

US 2015/0036668 A1 describes methods for avoiding power scaling and controlling transmit power in uplink data transmission. If a UE would be transmit-power limited when transmitting data concurrently on an uplink high speed dedicated physical control channel (HS-DPCCH) and an uplink data channel, the UE may forgo building data for transmission on the uplink data channel to avoid power scaling. If the UE would be transmit-power limited when transmitting data concurrently on an HS-DPCCH and a dedicated physical control channel (DPCCH), the UE may reduce the transmission power of a portion of the data transmitted on the DPCCH to avoid power scaling. The UE may also boost transmission power of a negative acknowledge transmission above network-specified power level.

### SUMMARY

This application describes a method and an apparatus for transmitting uplink control information, to improve downlink transmission reliability and downlink transmission resource utilization.

The invention is defined by the independent claims. Advantageous embodiments of the invention are given in the dependent claims.

Based on the foregoing technical solutions, the terminal device may dynamically adjust the transmit power of the uplink control information based on an independent power adjustment value in each transmission time interval. When the power adjustment value indicate to increase the transmit power of the uplink control information, an error rate of receiving the uplink control information by the network device can be reduced. In addition, according to the solutions provided in the embodiments, it is avoided that downlink transmission reliability is improved by increasing downlink transmission resources, so that downlink transmission resource utilization can be improved.

## BRIEF DESCRIPTION OF DRAWINGS

FIG. 1 is a schematic diagram of an application scenario according to an embodiment of the present invention;

FIG. 2 is a schematic diagram of a retransmission mechanism in downlink transmission in the prior art;

FIG. 3 shows curves of values ($P_e$, $P_{N2A}$) that meet a reliability requirement of 99.999% in different maximum retransmission quantities in a possible model;

FIG. 4 is a schematic communication diagram of a method for transmitting uplink control information according to an embodiment of the present invention;

FIG. 5 is a schematic communication diagram of a method for transmitting uplink control information according to an embodiment of the present invention;

FIG. 6 is a schematic communication diagram of another method for transmitting uplink control information according to an embodiment of the present invention;

FIG. 7 is a schematic communication diagram of still another method for transmitting uplink control information according to an embodiment of the present invention; and

FIG. 8 is a schematic structural diagram of a network device and a terminal device according to an embodiment of the present invention.

## DESCRIPTION OF EMBODIMENTS

The following describes embodiments of the present invention with reference to accompanying drawings.

It should be understood that technical solutions of the present invention may be applied to any communications system in which data transmission is performed through scheduling, such as a long term evolution (Long Term Evolution, LTE) system, an LTE frequency division duplex (frequency division duplex, FDD) system, LTE time division duplex (time division duplex, TDD) system, and a universal mobile telecommunications system (Universal Mobile Telecommunications System, UMTS).

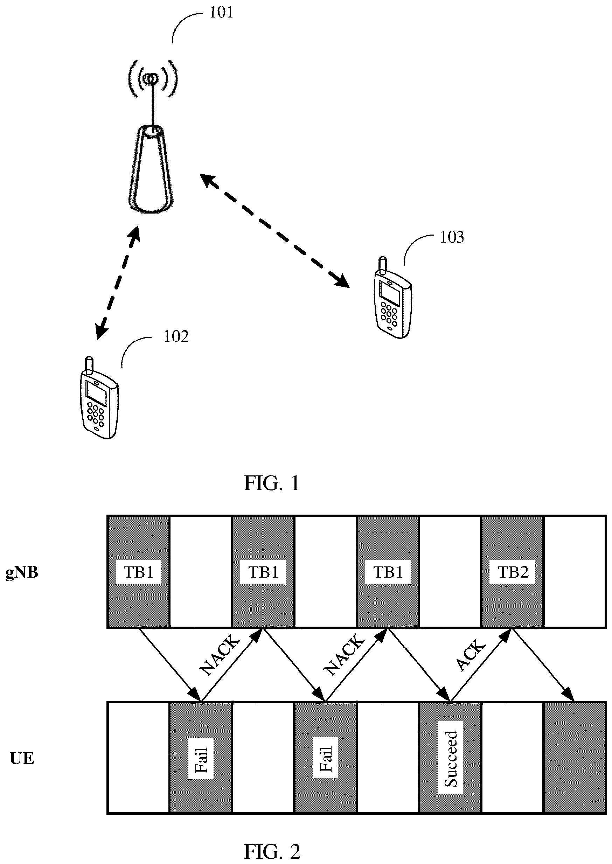

FIG. 1 shows an application scenario according to an embodiment of the present invention. The scenario includes a network device 101, and terminal devices 102 and 103 that are located in coverage of the network device 101 and communicate with the network device 101.

It should be further understood that, in the embodiments of the present invention, the terminal device may also be referred to as user equipment (user equipment, UE), a mobile station (mobile station, MS), a mobile terminal (mobile terminal), or the like. The terminal device may communicate with one or more core networks by using a radio access network (radio access network, RAN). For example, the terminal device is a device having a wireless transmission and reception function, and the terminal device may be deployed on land, including indoor or outdoor devices, handheld devices, or in-vehicle devices, or may be deployed on water (for example, on a steamship), or may be deployed in the air (for example, on an airplane, a balloon, or a satellite). The terminal device may be a mobile phone (mobile phone), a tablet (Pad), a computer having a wireless transmission and reception function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (also called remote medical), a wireless terminal in a smart grid (smart grid), a wireless terminal in transportation safety (transportation safety), a wireless terminal in a smart city (smart city), a wireless terminal in a smart home (smart home), or the like.

In the embodiments of the present invention, the network device may be a base transceiver station (base transceiver station, BTS) in a global system for mobile communications (global system for mobile communications, GSM) or a code division multiple access (Code Division Multiple Access, CDMA) system, or may be a NodeB (NodeB, NB) in a wideband code division multiple access (Wideband Code Division Multiple Access, WCDMA) system, or may be an evolved NodeB (evolved Node B, eNB or e-NodeB) in LTE or eLTE, or may be a gNodeB gNB ((next) generation NodeB) in a next generation mobile network, for example, 5G (fifth generation).

FIG. 2 is a schematic diagram of a downlink feedback (retransmission) method in an existing LTE system. Based on a hybrid automatic repeat request (hybrid automatic repeat request, HARQ) technology, if a terminal device correctly demodulates and decodes received downlink data, the terminal device feeds back an acknowledgment (acknowledgement, ACK) instruction to a network device; and if the terminal device does not correctly demodulate and decode the received downlink data, the terminal device feeds back a negative acknowledgment (negative acknowledgement, NACK) instruction to the network device. Both of the two instructions are carried on a physical uplink control channel (physical uplink control channel, PUCCH) pre-agreed on with the network device. It should be understood that uplink control information described in the embodiments of the present invention includes an ACK/NACK feedback of the terminal device for downlink data, and the ACK/NACK feedback is carried on the PUCCH. The network device detects, on the PUCCH, the ACK/NACK fed back by the terminal device. Table 1 shows different PUCCH formats and information and bit quantities separately carried in the PUCCH formats. A detection process is described by using a PUCCH format 1a as an example.

**Table 1 PUCCH format**

| PUCCH format | Quantity of carried bits | Carried information |
|---|---|---|
| 1 | N/A | Scheduling request (Scheduling Request, SR) |
| 1a | 1 | 1-bit ACK/NACK with/without an SR |
| 1b | 2 | 2-bit ACK/NACK with/without an SR |
| 2 | 20 | 20-bit CSI |
| 2a | 21 | 20-bit CSI + 1-bit ACK/NACK |
| 2b | 22 | 20-bit CSI + 2-bit ACK/NACK |
| 3 | 48 | ACK/NACK of a maximum of 10 bits in an FDD system |

Using the PUCCH format 1a as an example, an ACK/NACK sent by the terminal device is a symbol that includes 1-bit information and has a value of -1 or 1, and the network device sets thresholds $\theta_{ACK}$ and $\theta_{NACK}$ based on a pre-measured channel environment. If a detected signal amplitude is less than $\theta_{ACK}$, the network device determines that the terminal device transmits an ACK. If the signal amplitude is greater than $\theta_{NACK}$, the network device determines that the terminal device transmits a NACK. In other cases, the network device determines that the terminal device does not transmit any information.

The network device determines, based on the received ACK/NACK, to perform new data transmission or data retransmission on a downlink. After receiving the NACK, the network device usually arranges retransmission for the terminal device. After receiving the retransmission, the terminal device combines previous data with the retransmitted data and re-demodulates combined data. Such a cycle of NACK-retransmission is repeated until the terminal device correctly demodulates downlink data or until a retransmission quantity of the network device reaches a predetermined maximum value. The foregoing described retransmission mechanism may continue to be used in a fifth-generation mobile radio technology (5G-NR) system.

In a fifth-generation (5th generation, 5G) mobile communications system, an ultra-reliable low-latency communication (Ultra-Reliable Low-Latency Communication, URLLC) service type is introduced. A transmission success probability required by the service reaches 99.999%, in other words, a data transmission error rate is less than 10E-5. In the existing LTE system, it is specified that an error rate $P_e$ of each downlink transmission of the network device is 10%, and a miss detection probability $P_{N2A}$ of a downlink NACK feedback is 0. 1%. As described above, $P_e$ and $P_{N2A}$ jointly determine a probability of a successful downlink data transmission. If $P_e$ and $P_{N2A}$ specified in the existing LTE system are used, a high-reliability requirement of a URLLC service cannot be met.

In existing discussion about the URLLC service, it is generally considered that demodulation reliability of downlink control information (downlink control information, DCI) can be ensured by allocating more time-frequency resources. Therefore, it is assumed that in transmission of the URLLC service, a miss detection probability of the DCI can be ignored. On this basis, it is through k times of transmission that the network device enables the terminal device to correctly receive the downlink data. This means that an error occurs in each of previous k-1 times of transmission performed by the network device, and all NACK information fed back by the terminal device is correctly demodulated by the network device. For ease of description of a relationship between $P_e$ and $P_{N2A}$, it is assumed that error rates in all transmissions are the same, that is, $P_e$ and $P_{N2A}$ remain unchanged. Therefore, in the foregoing model, a relationship among a maximum retransmission quantity $K_{MAX}$, Pe, $P_{N2A}$ and a reliability requirement is:

$$\left(1-P_e\right)\sum_{i=0}^{K_{MAX}-1}\left(P_e\left(1-P_{N2A}\right)\right)^i = 1-\varepsilon = 99.999\% \quad (1)$$

For example, the network device performs a maximum of two times of transmission, that is, $K_{MAX}=2$, and a relationship among $P_e$, $P_{N2A}$ and the reliability requirement is:

$$\left(1-P_e\right)+P_e\left(1-P_{N2A}\right)\left(1-P_e\right) = 1-\varepsilon = 99.999\% \quad (2)$$

The first term on the left of the equation is a probability of correct single transmission, and the second term is a probability of incorrect initial transmission and correct retransmission.

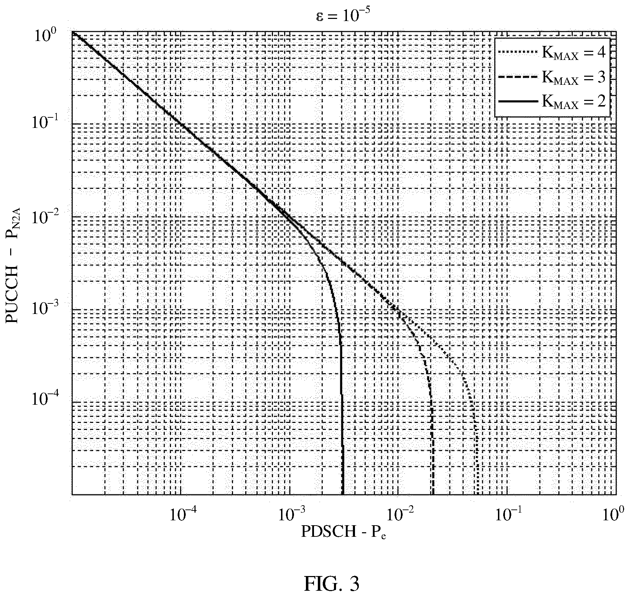

FIG. 3 shows curves of $P_e$ and $P_{N2A}$ that meet the equation (1) when values of $K_{MAX}$ are different in the foregoing model. In FIG. 3, if ($P_e$, $P_{N2A}$) occurs on the left side of a curve, it means that the combination of ($P_e$, $P_{N2A}$) can meet a requirement of a corresponding URLLC service, that is, correspondingly, $1\text{-}\varepsilon \geq 99.999\%$ . Otherwise, the combination cannot meet the requirement.

In addition, different URLLC service types may have different reliability and latency requirements, leading to different required $P_e$ and $P_{N2A}$. Table 1 gives several possible combinations of $P_e$, $P_{N2A}$, and the maximum retransmission quantity $K_{MAX}$ for reaching a reliability of 99.999%.

**Table 2 Possible relationship between $P_e$ and $P_{N2A}$ for reaching a reliability of 99.999%**

| Tolerable maximum retransmission quantity | $P_e$ | $P_{N2A}$ |
|---|---|---|
| 2 | 0.3% | 0.1% |
| 3 | 1.5% | 0.04% |
| 4 | 4% | 0.01% |
| 8 | 10% | 0.01% |

In the LTE system, there is a method in which the network device may change a downlink transmission error rate $P_e$ and fix a miss detection probability $P_{N2A}$ of a downlink NACK feedback to improve reliability. Table 3 gives several possible combinations of $P_e$, $P_{N2A}$, and the maximum retransmission quantity for using the method. It is known that $P_e$ specified in the LTE system is 10%. It can be learned from Table 2 and Table 3 that in the method, fixing $P_{N2A}$ causes significant reduction in the downlink transmission error rate $P_e$ that meets a URLLC reliability requirement. The downlink transmission error rate $P_e$ is related to a size of a resource allocated by the network device for downlink transmission. For a same data volume, if a lower error rate needs to be achieved, more resources need to be allocated. Because a quantity of bits in the downlink transmission is usually relatively large (hundreds of bits), to reduce $P_e$, the network device needs to allocate a large quantity of redundant resources for the downlink transmission. It can be learned that, this method causes a severe resource waste when transmission resources are in shortage. Therefore, a method is required not only to improve a probability of a successful downlink transmission to meet a high-reliability requirement of the URLLC service, but also to avoid wasting downlink transmission resources as much as possible.

**Table 3 In case of fixed $P_{N2A}$ in the LTE system, change $P_e$ to reach a reliability of 99.999%**

| Tolerable maximum retransmission quantity | $P_e$ | $P_{N2A}$ |
|---|---|---|
| 2 | 0.3% | 0.1% |
| 3 | 1% | 0.1% |
| 4 | 1% | 0.1% |
| 8 | 1% | 0.1% |

To avoid a waste of downlink resources caused by reducing $P_e$, in the LTE system, there is another method for improving downlink transmission reliability only through implementation of the network device. A specific method is that the network device does not change $P_e$, but adjusts thresholds $\theta_{ACK}$ and $\theta_{NACK}$ for determining a downlink ACK/NACK by the network device, to change a miss detection probability $P_{N2A}$ of a downlink NACK feedback. Similarly, this method also has a disadvantage: a downlink ACK loss probability $P_{AM}$ increases when the thresholds are adjusted to decrease $P_{N2A}$. The increase in the downlink ACK loss probability $P_{AM}$ increases a quantity of incorrect retransmissions of the network device, and also causes an unnecessary waste of downlink transmission resources.

To resolve the foregoing problem, an embodiment of the present invention provides a method for transmitting uplink control information, to flexibly adjust transmit power of uplink control information of the terminal device, thereby reducing an error rate of receiving the uplink control information by the network device. In addition, when downlink transmission reliability is improved to meet a URLLC service requirement, an error rate that can be tolerated in a single downlink data transmission is improved, and therefore utilization of a downlink transmission resource can be improved compared with an existing method.

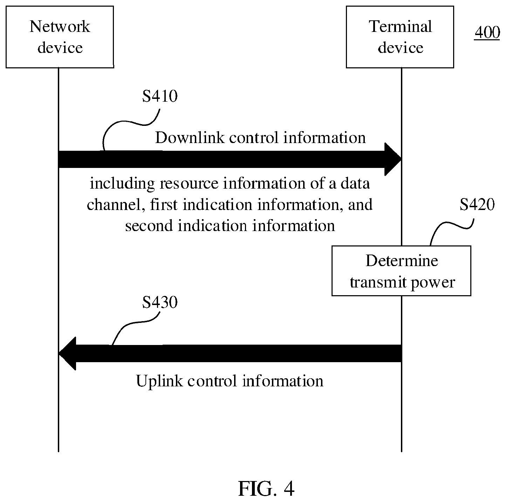

FIG. 4 shows a schematic communication diagram of a method 400 for transmitting uplink control information according to an embodiment of the present invention. As shown in FIG. 4, the method 400 includes the following steps.

S410. A terminal device receives downlink control information, where the downlink control information includes resource information of a data channel, first indication information, and second indication information. The first indication information indicates a power offset value between a transmission time interval k and a transmission time interval k-1. The second indication information is used to determine a power adjustment value in the transmission time interval *k*.

The resource information of the data channel indicates scheduling information for a current data transmission, including a used time-frequency resource, a modulation and coding scheme, and the like. The terminal device demodulates a downlink data channel based on the indicated information such as the time-frequency resource and the modulation and coding scheme. When correctly demodulating the downlink data channel, the terminal device generates ACK feedback information. When failing to correctly demodulate the downlink data channel, the terminal device generates NACK feedback information. The first indication information indicates the power offset value between the transmission time interval k and the transmission time interval k-1. Power at which the terminal device transmits the uplink control information in the transmission time interval k and that is specified in a standard 36.213 is as follows:

$$P_{PUCCH}(k) = \min \left\{ \begin{array}{l} P_{CMAX,c}(k), \\ P_{0\_PUCCH} + PL_c + h\left(n_{CQI}, n_{HARQ}, n_{SR}\right) + \Delta_{F\_PUCCH}(F) + \Delta_{TxD}(F') + g(k) \end{array} \right\} \quad (3)$$

$P_{CMAX,c}(k)$ is a maximum transmit power value allowed by the terminal device in the transmission time interval *k*, and $P_{0\_PUCCH}$, $\Delta_{F\_PUCCH}(F)$, and $\Delta_{TxD}(F')$ are configured by using higher layer signaling. $PL_c$ and $h(n_{CQI}, n_{HARQ}, n_{SR})$ are obtained through calculation by the terminal device, where $PL_c$ is obtained through calculation by using receive end power of a pilot signal, and a parameter in $h(n_{CQI}, n_{HARQ}, n_{SR})$ is configured by using the higher layer signaling.

$$g(k) = g(k-1) + \sum_{m=0}^{M-1} \delta_{PUCCH}(k - k_m)$$
, where $g(k)$ is a PUCCH power control adjustment state in the current transmission time interval *k*, and $g(k)$ = PUCCH power control adjustment state $g(k-1)$ in the transmission time interval *k*-1 + Power offset values $\delta_{PUCCH}(k - k_m)$ received in a plurality of transmission time intervals $k - k_m$ (0≤m≤ *M-1* ).

$$\sum_{m=0}^{M-1} \delta_{PUCCH}(k - k_m)$$
is the power offset value between the transmission time interval *k* and the transmission time interval *k - 1*. It can be learned that $g(k)$ is a parameter used to determine the power at which the terminal device transmits the uplink control information in the transmission time interval k.

To meet reliability requirements of different URLLC service types, in the method for transmitting uplink control information provided in this embodiment of the present invention, the terminal device dynamically adjusts the transmit power of the uplink control information based on an independent power adjustment value in each transmission time interval. When the power adjustment value indicate to increase the transmit power of the uplink control information, an error rate of receiving the uplink control information by a network device can be reduced. The uplink control information includes downlink feedback information, thereby reducing a probability $P_{N2A}$ that the network device misses a downlink NACK feedback. In addition, it is avoided that downlink transmission reliability is improved by increasing downlink transmission resources, so that downlink transmission resource utilization can be improved. In the method provided in this embodiment of the present invention, the power at which the terminal transmits the uplink control information in the transmission time interval k is as follows:

$$P_{PUCCH}(k) = \min \left\{ \begin{array}{l} P_{CMAX,c}(k), \\ P_{0\_PUCCH} + PL_c + h\left(n_{CQI}, n_{HARQ}, n_{SR}\right) + \Delta_{F\_PUCCH}(F) + \Delta_{TxD}(F') + \Delta_{URLLC}(k, \varepsilon, K) + g(k) \end{array} \right\},$$

$$(4)$$

$\Delta_{URLLC}(k,\varepsilon,K)$ is a PUCCH power adjustment value in the transmission time interval k, and the power adjustment value is determined based on reliability and latency requirements of the URLLC service. $\varepsilon$ indicates a reliability requirement of a current URLLC service, and K indicates a remaining retransmission quantity of the terminal device.

The power adjustment value is determined based on the reliability requirement $\varepsilon$ and the remaining retransmission quantity *K* that correspond to a type of the URLLC service transmitted currently, but not based on a maximum retransmission quantity $K_{MAX}$ allowed by the URLLC. This is because the terminal device may be unable to correctly receive downlink control information that is initially transmitted. Therefore, it is meaningless to indicate the maximum retransmission quantity $K_{MAX}$ that is of the terminal device and meets the reliability requirement. For example, if the terminal device misses $X$ times of downlink transmission, the network device needs to complete transmission within remaining $K = K_{MAX} - x$ transmit opportunities. Therefore, the power adjustment value $\Delta_{URLLC}(\varepsilon, K)$ should be calculated based on the remaining retransmission quantity K instead of the maximum retransmission quantity $K_{MAX}$.

In an example, the second indication information in the downlink control information (downlink control information, DCI) sent by the network device to the terminal device is an identifier of the power adjustment value. To be specific, the network device obtains, based on the reliability requirement $\varepsilon$ and the remaining retransmission quantity K that correspond to the type of the URLLC service transmitted currently, the power adjustment value $\Delta_{URLLC}(k,\varepsilon,K)$ in the transmission time interval k through calculation or table lookup, and transmits an index of the power adjustment value $\Delta_{URLLC}(k,\varepsilon,K)$ in the transmission time interval $k$ to the terminal device. The terminal device receives the index of the power adjustment value in the DCI, and determines the power adjustment value $\Delta_{URLLC}(k,\varepsilon,K)$ in the transmission time interval k.

It should be noted that, in the example, before the terminal device determines the power adjustment value $\Delta_{URLLC}(k,\varepsilon,K)$, the method 400 further includes: receiving higher layer signaling, where the higher layer signaling is used to configure at least two power adjustment values, and the index of the power adjustment value received by the terminal device indicates one of the at least two power adjustment values. The terminal device obtains, based on the index in the DCI, the power adjustment value $\Delta_{URLLC}(k,\varepsilon,K)$ in the transmission time interval $k$.

Optionally, the at least two power adjustment values may also be predefined in a communications network, and the network device and the terminal device know, by default, a mapping relationship between the power adjustment values and indexes of the power adjustment values.

Optionally, the power adjustment value may be one or more values in *0 ~ 10dB.*

Optionally, the downlink control information further includes repetition quantity indication information of the uplink control information. The repetition quantity indication information of the uplink control information indicates a quantity that the terminal device repetitively transmits feedback information in this time of downlink feedback. The repetition quantity of the PUCCH may be separately indicated, or may be indicated together with the second indication information. It should be noted that, in an existing system, a network device configures a repetition quantity of ACK/NACK feedback information by using higher layer signaling. In other words, the repetition quantity of the ACK/NACK cannot dynamically change based on a type of a URLLC service in each transmission. Repeated transmission of same feedback information can significantly increase an equivalent signal-to-noise ratio. For example, if two times (one time of initial transmission plus one time of retransmission) are repeated, and a signal-to-noise ratio at a receive end of the network device increases by about 3 dB. From a perspective of detection performance, this has a same effect as that of directly increasing transmit power by the terminal device. Because maximum transmit power of the uplink control information is limited, the network device may configure the repetition quantity, to improve a correct rate of receiving the uplink control information by the network device, thereby meeting an expected reliability requirement.

In another example, the second indication information in the downlink control information DCI sent by the network device to the terminal device is indication information of the remaining retransmission quantity K corresponding to the type of the URLLC service type currently transmitted, or indication information of a first combination of the reliability requirement $\varepsilon$ and the remaining retransmission quantity K. The terminal device determines the power adjustment value in the transmission time interval k based on the second indication information. The following separately describes two possible values existing in the second indication information:

Possibility 1: In a possible scenario, reliability requirements $\varepsilon$ of different related URLLC service types may be the same. For example, in industrial control, two different URLLC service types such as discrete automation control (which has a reliability requirement of 99.9999% and a latency requirement of 1 ms) and remote automation control (which has a reliability requirement of 99.9999% and a latency requirement of 50 ms) in Table 4 may coexist, and have a same transmission reliability requirement. In this case, the reliability requirement may be predefined in a communications network or indicated in advance by using higher layer signaling. In this case, the second indication information in the DCI sent by the network device to the terminal device is an index of the remaining retransmission quantity K. The terminal device obtains a value of the remaining retransmission quantity K based on the index in the DCI.

For the possibility, the determining, by the terminal device, the power adjustment value in the transmission time interval k based on the second indication information includes: obtaining, by the terminal device through table lookup, the power adjustment value $\Delta_{URLLC}(k,\varepsilon,K)$ of the transmission time interval k based on the reliability requirement $\varepsilon$ and the value of the remaining retransmission quantity K.

**Table 4 Several possible URLLC service requirements in industrial control**

| Scenario | Latency requirement | Transmission reliability requirement |
|---|---|---|
| Discrete automation control | 1 ms | 99.9999% |
| Remote automation control | 50 ms | 99.9999% |

(continued)

| Scenario | Latency requirement | Transmission reliability requirement |
|---|---|---|
| Automation monitoring | 50 ms | 99.9% |

Possibility 2: In a scenario in which a type of a URLLC service in downlink transmission continuously changes, a reliability requirement in each downlink transmission of the network device may change. For example, in industrial control, a plurality of URLLC service types such as discrete automation control (which has a reliability requirement of 99.9999% and a latency requirement of 1 ms) and automation monitoring (which has a reliability requirement of 99.99% and a latency requirement of 50 ms) in Table 4 may coexist, and have different transmission reliability requirements. In this case, when the network device performs downlink transmission, the second indication information included in the DCI indicates an index of the first combination of the reliability requirement $\varepsilon$ and the remaining retransmission quantity K.

It should be noted that, for the possibility, before the terminal device determines the power adjustment value based on the second indication information, the method 400 further includes: receiving higher layer signaling, where the higher layer signaling is used to configure at least two combinations, and the index of the first combination received by the terminal device indicates one of the at least two combinations. The terminal device obtains the first combination of the reliability requirement $\varepsilon$ and the remaining retransmission quantity K based on the index in the DCI.

Optionally, the at least two combinations may alternatively be predefined in a communications network, and the network device and the terminal device know, by default, a mapping relationship between the combinations of the reliability requirement $\varepsilon$ and the remaining retransmission quantity K and indexes of the combinations.

For the possibility, the determining, by the terminal device, the power adjustment value in the transmission time interval $k$ based on the second indication information includes: obtaining, by the terminal device through table lookup, the power adjustment value $\Delta_{URLLC}(k,\varepsilon,K)$ of the transmission time interval $k$ based on the first combination of the reliability requirement $\varepsilon$ and the remaining retransmission quantity K.

S420. The terminal device determines transmit power in the transmission time interval k.

In an example, the terminal determines the transmit power in the transmission time interval k based on the power offset value and the power adjustment value.

Specifically, the terminal device obtains, based on the power offset value, the power control adjustment state $g(k)$ in the transmission time interval k, and obtains the power adjustment value $\Delta_{URLLC}(k,\varepsilon,K)$ in the transmission time interval k through step S410. Then, the terminal device determines transmit power $P_{PUCCH}(k)$ of the PUCCH in the time interval k according to the formula (4). As described above,

$P_{CMAX,c}(k)$ is the maximum transmit power value allowed by the terminal device in the transmission time interval k, and $P_{0\_PUCCH}$, $\Delta_{F\_PUCCH}$, $(F)$, and $\Delta_{TxD}(F')$ are configured by using the higher layer signaling. $PL_c$ and $h(n_{CQI}, n_{HARQ} n_{SR})$ are obtained through calculation by the terminal device, where $PL_c$ is obtained through calculation by using receive end power of a pilot signal, and parameters in $h(n_{CQI}, n_{HARQ} n_{SR})$ are configured by using the higher layer signaling.

In another example, when the feedback information generated by the terminal device is a NACK, the terminal device determines the transmit power in the transmission time interval k based on the power offset value and the power adjustment value. A specific method is described above, and details are not described again. When the feedback information generated by the terminal device is an ACK, the terminal device ignores the second indication information in the downlink control information, and determines the transmit power of the uplink control information based only on the power offset value indicated by the first indication information. Specifically, the terminal device obtains, based on the first indication information in the downlink control information DCI, the power control adjustment state $g(k)$ in the transmission time interval $k$, and then obtains transmit power $P_{PUCCH}(k)$ of the PUCCH in the transmission time interval k through calculation according to the formula (3).

S430. Transmit the uplink control information based on the transmit power, that is, the terminal device transmits the uplink control information based on the transmit power $P_{PUCCH}(k)$ of the PUCCH in the transmission time interval k and that is obtained according to the foregoing steps, where the uplink control information includes ACK/NACK feedback information for the downlink data channel.

Optionally, when the downlink control information further includes a repetition quantity of the uplink control information, the terminal device repeatedly transmits , based on an indication, the uplink control information at the transmit power $P_{PUCCH}(k)$ of the PUCCH and that is obtained according to the foregoing steps. The uplink control information includes the ACK/NACK feedback information for the downlink data channel.

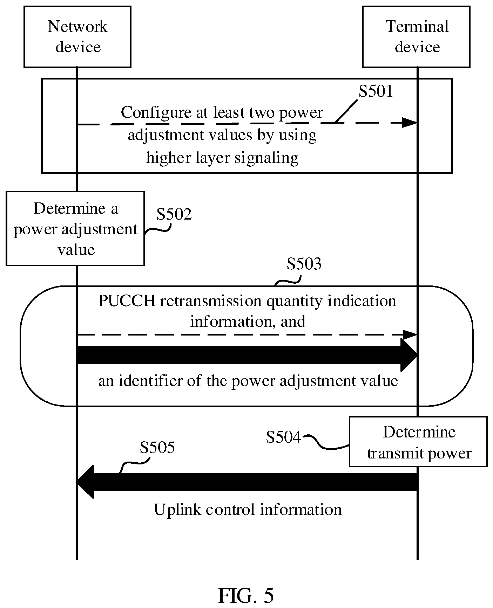

Therefore, according to the method for transmitting uplink control information provided in this embodiment of the present invention, the transmit power or the retransmission quantity of the uplink control information can be dynamically determined, and the transmit power of the uplink control information of the terminal device may be flexibly adjusted, thereby reducing an error rate of receiving the uplink control information by the network device to achieve an objective of meeting reliability requirements of different URLLC service types by changing $P_{N2A}$. In addition, a waste of downlink transmission resources caused by reducing $P_e$ or increasing $P_{AM}$ can be avoided. When improving downlink transmission reliability to meet a URLLC service requirement, an error rate that can be tolerated in a single downlink data transmission is improved, so that downlink transmission resource utilization can be improved compared with an existing method. The method for transmitting uplink control information according to the embodiments of the present invention is described above with reference to FIG. 4. A communication process of a method for transmitting uplink control information according to embodiments of the present invention is described below with reference to FIG. 5 to FIG. 7.

FIG. 5 shows a possible communication process of a method for transmitting uplink control information according to an embodiment of the present invention.

First, a network device configures at least two power adjustment values for a related terminal device by using higher layer signaling (S501), and the at least two power adjustment values can be used by the terminal device to look up a table.

Then, before one time of downlink transmission starts, the network device determines a power adjustment value $\Delta_{URLLC}(k,\varepsilon,K)$ based on a reliability requirement of a URLLC service type and a remaining retransmission quantity corresponding to uplink control information (S502).

Then, the network device transmits downlink control information to the terminal device. The downlink control information includes resource information of a data channel, first indication information, and an identifier of the power adjustment value $\Delta_{URLLC}(k,\varepsilon,K)$. Optionally, the downlink control information further includes repetition quantity indication information of the uplink control information (S503).

Then, the terminal device determines, based on a power offset value and the power adjustment value, transmit power $P_{PUCCH}(k)$ of a PUCCH in a transmission time interval k. A method for determining the transmit power is as described in step S420 in FIG. 4, and details are not described herein again (S504).

Finally, the uplink control information is transmitted based on the transmit power. That is, the terminal device transmits the uplink control information based on the transmit power $P_{PUCCH}(k)$ of the PUCCH in the transmission time interval k and that is obtained according to the foregoing steps, where the uplink control information includes feedback information for the data channel (S505). Optionally, if the downlink control information includes the repetition quantity indication information of the uplink control information, the terminal device repeatedly transmits the uplink control information for a plurality of times according to an indication.

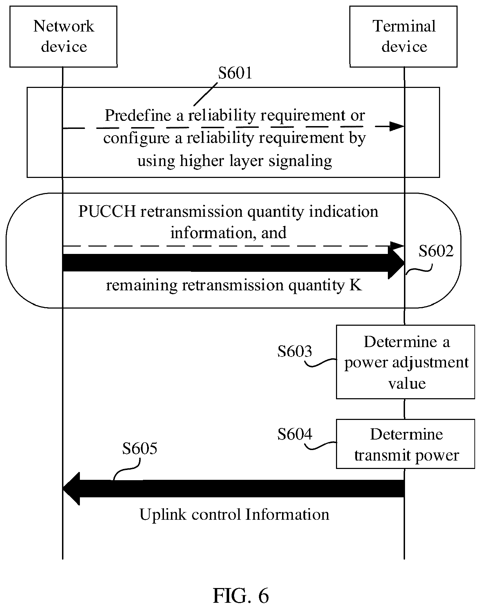

FIG. 6 shows another possible communication process of a method for transmitting uplink control information according to an embodiment of the present invention. In a possible scenario, reliability requirements of different related URLLC service types may be the same. FIG. 6 shows a communication process in the possible scenario.

First, a network device configures a reliability requirement for a related terminal device by using higher layer signaling, or a communications network agrees on a reliability requirement through predefinition (S601).

Then, the network device transmits downlink control information to the terminal device. The downlink control information includes resource information of a data channel, first indication information, and an index of a remaining retransmission quantity K. Optionally, the downlink control information further includes repetition quantity indication information of uplink control information (S602).

Then, after receiving the downlink control information, the terminal device determines a power adjustment value $\Delta_{URLLC}(k,\varepsilon,K)$ based on a reliability requirement of a URLLC service type and the remaining retransmission quantity (S603). A method for determining the power adjustment value is as described in step S410 in FIG. 4, and details are not described herein again.

In addition, the terminal device determines, based on a power offset value and the power adjustment value, transmit power $P_{PUCCH}(k)$ of a PUCCH in a transmission time interval k. A method for determining the transmit power is as described in step S420 in FIG. 4, and details are not described herein again (S604).

Finally, the uplink control information is transmitted based on the transmit power. That is, the terminal device transmits the uplink control information based on the transmit power $P_{PUCCH}(k)$ of the PUCCH in the transmission time interval k and that is obtained according to the foregoing steps, where the uplink control information includes feedback information for the data channel (S605). Optionally, if the downlink control information includes the repetition quantity indication information of the uplink control information, the terminal device repeatedly transmits the uplink control information for a plurality of times according to an indication.

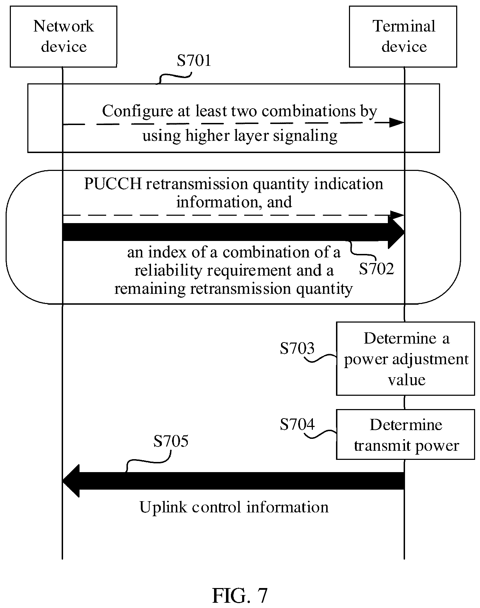

FIG. 7 shows still another possible communication process of a method for transmitting uplink control information according to an embodiment of the present invention. In a scenario in which a type of a URLLC service in downlink transmission continuously changes, a reliability requirement in each downlink transmission of a network device may change. FIG. 7 shows a communication process in the possible scenario.

First, the network device configures at least two combinations of a reliability requirement and a remaining retransmission quantity for a related terminal device by using higher layer signaling (S701). The at least two combinations can be used by the terminal device to look up a table.

Then, the network device transmits downlink control information to the terminal device. The downlink control information includes resource information of a data channel, first indication information, and an index of a first combination of the reliability requirement and the remaining retransmission quantity. Optionally, the downlink control information further includes repetition quantity indication information of uplink control information (S702).

Then, after receiving the downlink control information, the terminal device determines a power adjustment value $\Delta_{URLLC}(k,\varepsilon,K)$ based on the first combination of the reliability requirement and the remaining retransmission quantity (S703). A method for determining the power adjustment value is as described in step S410 in FIG. 4, and details are not described herein again.

In addition, the terminal device determines, based on a power offset value and the power adjustment value, transmit power $P_{PUCCH}(k)$ of a PUCCH in a transmission time interval k. A method for determining the transmit power is as described in step S420 in FIG. 4, and details are not described herein again (S704).

Finally, the uplink control information is transmitted based on the transmit power. That is, the terminal device transmits the uplink control information based on the transmit power $P_{PUCCH}(k)$ of the PUCCH in the transmission time interval k and that is obtained according to the foregoing steps, where the uplink control information includes feedback information for the data channel (S705). Optionally, if the downlink control information includes the repetition quantity indication information of the uplink control information, the terminal device repeatedly transmits the uplink control information for a plurality of times according to an indication.

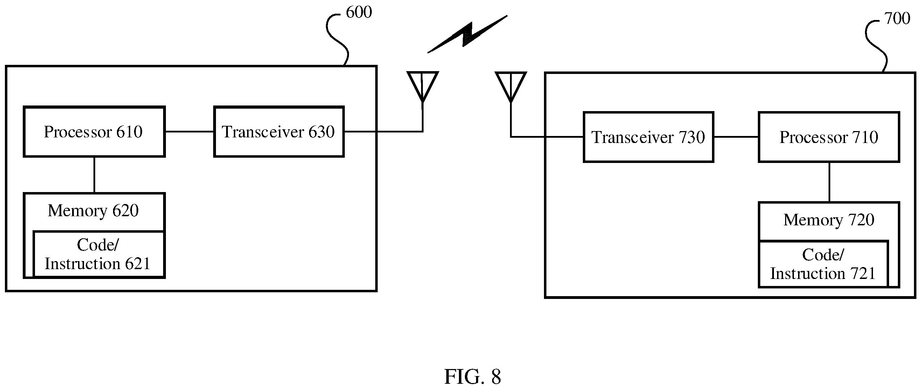

FIG. 8 shows a schematic block diagram of a network device 600 and a terminal device 700 for implementing a method for transmitting uplink control information according to an embodiment of the present invention.

The network device 600 includes a processor 610, a transceiver 630, and a memory 620. The memory 620 includes a computer-readable medium 621, and stores executable program code or an instruction. The transceiver 630 is configured to: support information receiving and transmitting between the network device and the terminal device described in the foregoing embodiments, and support radio communication between the terminal device and another terminal device. The processor 610 performs various functions used to communicate with the terminal device. In an uplink, an uplink signal from the terminal device is received by using an antenna. There may be one antenna or a plurality of antennas. The uplink signal is demodulated by the transceiver 630, and data is further processed by the processor 610. In a downlink, service data and control information are processed by the processor 610 and are modulated by the transceiver 630 to generate a downlink signal, and the downlink signal is transmitted to the terminal device by using the antenna. The processor 610 further performs a processing process related to the network device in FIG. 4 and FIG. 5 or another process used for the method described in this application. The memory 620 is configured to store data generated when the network device performs the method in the embodiments of the present invention, and computer-executable program code or an instruction.

The terminal device 700 includes a processor 710, a transceiver 730, and a memory 720. The memory 720 includes a computer-readable medium 721, and stores executable program code or an instruction. The processor 710 controls and manages an action of a terminal, and is configured to perform processing performed by the terminal device in the foregoing embodiments. The transceiver 730 is connected to the processor 710 and transmits or receives a radio signal by using an antenna. There may be one antenna or a plurality of antennas. The memory 720 is configured to store data generated when the terminal device performs the method in the embodiments of the present invention, and computer-executable program code or an instruction.

It may be understood that FIG. 8 shows only a simplified design of the network device and the terminal device. In an actual application, the network device and the terminal device may include any quantity of transceivers, processors, memories, and the like, and all base stations that can implement the present invention fall within the protection scope of the present invention.

An embodiment of the present invention further provides an apparatus. A structure of the apparatus includes an input/output interface, a processor, and a memory. The input/output interface is configured to: transmit data received by a terminal device by using a transceiver to the processor, and output information processed by the processor to the transceiver of the terminal device for transmitting. The processor reads and executes an instruction in the memory, to implement a function of the terminal device in the foregoing method. It may be understood that the apparatus can implement a function of the processor 710 of the terminal device. The memory of the apparatus may be an internal memory of the processor 710 in the embodiment of the terminal device, or may be the memory 720 in the embodiment of the terminal device.

An embodiment of the present invention further provides another apparatus. A structure of the apparatus includes an input/output interface, a processor, and a memory. The input/output interface is configured to: transmit data processed by the processor to a transceiver of a network device for transmitting, and transmit the data received by the transceiver of the network device to the processor for processing. The processor reads and executes an instruction in the memory to implement a function of behavior of the network device in the foregoing method designs. It may be understood that the apparatus can implement a function of the processor 610 of the network device. The memory of the apparatus may be an internal memory of the processor 610 in the network device embodiment, or may be the memory 620 in the network device embodiment.

The processor configured to perform functions of the network device and the terminal device in the present invention may be a central processing unit (CPU), a general-purpose processor, a digital signal processor (DSP), an application-specific integrated circuit (ASIC), a field programmable gate array (FPGA), or another programmable logic device, a transistor logic device, a hardware component, or any combination thereof. The processor may implement or execute various example logical blocks, modules, and circuits described with reference to content disclosed in the present invention. The processor may also be a combination implementing a computing function, for example, a combination of one or more microprocessors, or a combination of a DSP and a microprocessor.

Method or algorithm steps described in combination with the content disclosed in the present invention may be implemented by hardware, or may be implemented by a processor by executing a software instruction. The software instruction may include a corresponding software module. The software module may be stored in a RAM memory, a flash memory, a ROM memory, an EPROM memory, an EEPROM memory, a register, a hard disk, a removable magnetic disk, a CD-ROM, or a memory of any other form well-known in the art. For example, a storage medium is coupled to a processor, so that the processor can read information from the storage medium, and can write information into the storage medium.

A person skilled in the art should be aware that in the foregoing one or more examples, the functions described in the present invention may be implemented by using hardware, software, firmware, or any combination thereof. When the functions are implemented by software, the functions may be stored in a computer-readable medium or transmitted as one or more instructions or code in a computer-readable medium. The computer-readable medium includes a computer storage medium and a communications medium, where the communications medium includes any medium that facilitates transmission of a computer program from one place to another. The storage medium may be any available medium accessible to a general-purpose or special-purpose computer.

The objectives, technical solutions, and beneficial effects of the present invention are further described in detail in the foregoing specific implementations. It should be understood that the foregoing descriptions are merely specific implementations of the present invention, which is solely defined by the appended claims.

**Claims**

1. A method (400) for transmitting uplink control information in a Long Term Evolution, LTE, or Fifth Generation, 5G, communication system, comprising:

   receiving (S410), by a terminal device (102, 103, 700), downlink control information, wherein the downlink control information comprises resource information of a data channel, first indication information, and second indication information, the first indication information indicates a power offset value between a transmission time interval k and a transmission time interval k-1, and the second indication information is used to determine a power adjustment value in the transmission time interval k;
   determining (S420, S504, S604, S704), by the terminal device (102, 103, 700), transmit power in the transmission time interval k based on the power offset value and the power adjustment value; and
   transmitting (S430, S505, S605, S705), by the terminal device (102, 103, 700), uplink control information in the transmission time interval k based on the transmit power, wherein the uplink control information comprises feedback information for the data channel, and when the feedback information is a negative acknowledgment NACK, the transmit power is determined based on the power offset value and the power adjustment value, or when the feedback information is an acknowledgment ACK, the transmit power is determined based on the power offset value;
   wherein the second indication information is indication information of a reliability requirement, a remaining retransmission quantity, or a first combination of a reliability requirement and a remaining retransmission quantity; and
   before the determining (S420, S604, S704), by the terminal device (102, 103, 700), transmit power in the transmission time interval k based on the power offset value and the power adjustment value, the method further comprises:
   determining (S603, S703), by the terminal device (102, 103, 700), the power adjustment value based on the second indication information.

2. A terminal device (102, 103, 700), comprising:

   a transceiver (730), configured to receive (S410) downlink control information in a Long Term Evolution, LTE, or Fifth Generation, 5G, communication system, wherein the downlink control information comprises resource information of a data channel, first indication information, and second indication information, the first indication information indicates a power offset value between a transmission time interval k and a transmission time interval k-1, and the second indication information is used to determine a power adjustment value in the transmission time interval k; and

a processor (710), configured to determine (S420, S504, S604, S704) transmit power in the transmission time interval k based on the power offset value and the power adjustment value, wherein

the transceiver (730) is further configured to transmit (S430, S505, S605, S705) uplink control information in the transmission time interval k based on the transmit power, wherein the uplink control information comprises feedback information for the data channel, and when the feedback information is a negative acknowledgment NACK, the transmit power is determined based on the power offset value and the power adjustment value, or when the feedback information is an acknowledgment ACK, the transmit power is determined based on the power offset value;

wherein the second indication information is indication information of a reliability requirement, a remaining retransmission quantity, or a first combination of a reliability requirement and a remaining retransmission quantity;

wherein before the determining (S420, S604, S704) transmit power in the transmission time interval k based on the power offset value and the power adjustment value, the processor (710) is further configured to:

determine (S603, S703) the power adjustment value based on the second indication information.

3. A method (400) for receiving uplink control information in a Long Term Evolution, LTE, or Fifth Generation, 5G, communication system, comprising:

transmitting (S410), by a network device (101, 600), downlink control information, wherein the downlink control information comprises resource information of a downlink data channel, first indication information, and second indication information, the first indication information indicates a power offset value of a terminal device (102, 103, 700) between a transmission time interval k and a transmission time interval k-1, and the second indication information is used to determine a power adjustment value of the terminal device in the transmission time interval k; and

receiving (S430, S505, S605, S705), by the network device (101, 600), uplink control information in the transmission time interval k, wherein the uplink control information comprises feedback information for the downlink data channel, the uplink control information is sent by the terminal device (102, 103, 700) at first transmit power, and when the feedback information is a negative acknowledgment NACK, the first transmit power is determined by the terminal device based on the power offset value and the power adjustment value, or when the feedback information is an acknowledgment ACK, the first transmit power is determined by the terminal device based on the power offset value;

wherein the second indication information is indication information of a reliability requirement, a remaining retransmission quantity, or a first combination of a reliability requirement and a remaining retransmission quantity.

4. A network device (101, 600), comprising a processor (610) and a transceiver (630), wherein

the transceiver (630) is configured to transmit (S410) downlink control information in a Long Term Evolution, LTE, or Fifth Generation, 5G, communication system, wherein the downlink control information comprises resource information of a downlink data channel, first indication information, and second indication information, the first indication information indicates a power offset value of a terminal device (102, 103, 700) between a transmission time interval k and a transmission time interval k-1, and the second indication information is used to determine a power adjustment value of the terminal device in the transmission time interval k; and

the transceiver (630) is further configured to receive uplink control information in the transmission time interval k, wherein the uplink control information comprises feedback information for the downlink data channel, the uplink control information is sent by the terminal device (102, 103, 700) at first transmit power, and when the feedback information is a negative acknowledgment NACK, the first transmit power is determined by the terminal device based on the power offset value and the power adjustment value, or when the feedback information is an acknowledgment ACK, the first transmit power is determined by the terminal device based on the power offset value;

wherein the second indication information is indication information of a reliability requirement, a remaining retransmission quantity, or a first combination of a reliability requirement and a remaining retransmission quantity.

5. A computer-readable storage medium, wherein the computer-readable storage medium stores an instruction, and the instruction is used to perform the method according to claim 1.

6. A computer-readable storage medium, wherein the computer-readable storage medium stores an instruction, and the instruction is used to perform the method according to claim 3.

**Patentansprüche**

1. Verfahren (400) zum Übertragen von Uplink-Steuerinformationen in einem Long-Term-Evolution(LTE)-Kommunikationssystem oder einem Kommunikationssystem der Fünften Generation (5G), umfassend:

Empfangen (S410), durch ein Endgerät (102, 103, 700), von Downlink-Steuerinformationen, wobei die Downlink-Steuerinformationen Ressourceninformationen eines Datenkanals, erste Anzeigeinformationen und zweite Anzeigeinformationen umfassen, wobei die ersten Anzeigeinformationen einen Leistungsversatzwert zwischen einem Übertragungszeitintervall k und einem Übertragungszeitintervall k-1 anzeigen, und die zweiten Anzeigeinformationen verwendet werden, um einen Leistungseinstellwert in dem Übertragungszeitintervall k zu bestimmen;
Bestimmen (S420, S504, S604, S704), durch das Endgerät (102, 103, 700), der Übertragungsleistung in dem Übertragungszeitintervall k basierend auf dem Leistungsversatzwert und dem Leistungseinstellwert; und
Übertragen (S430, S505, S605, S705), durch das Endgerät (102, 103, 700), von Uplink-Steuerinformationen in dem Übertragungszeitintervall k basierend auf der Übertragungsleistung, wobei die Uplink-Steuerinformationen Rückkopplungsinformationen für den Datenkanal umfassen, und wenn die Rückkopplungsinformationen eine negative Bestätigung (NACK) sind, die Übertragungsleistung basierend auf dem Leistungsversatzwert und dem Leistungseinstellwert bestimmt wird, oder wenn die Rückkopplungsinformationen eine Bestätigung (ACK) sind, die Übertragungsleistung basierend auf dem Leistungsversatzwert bestimmt wird;
wobei die zweiten Anzeigeinformationen Anzeigeinformationen einer Zuverlässigkeitsanforderung, einer verbleibenden Neuübertragungsmenge oder einer ersten Kombination einer Zuverlässigkeitsanforderung und einer verbleibenden Neuübertragungsmenge sind; und
wobei vor dem Bestimmen (S420, S604, S704), durch das Endgerät (102, 103, 700), der Übertragungsleistung in dem Übertragungszeitintervall k basierend auf dem Leistungsversatzwert und dem Leistungseinstellwert, das Verfahren ferner umfasst:
Bestimmen (S603, S703), durch das Endgerät (102, 103, 700), des Leistungseinstellwerts basierend auf den zweiten Anzeigeinformationen.

2. Endgerät (102, 103, 700), umfassend:

einen Sendeempfänger (730), der konfiguriert ist, um Downlink-Steuerinformationen in einem Long-Term-Evolution(LTE)-Kommunikationssystem oder einem Kommunikationssystem der Fünften Generation (5G) zu empfangen (S410), wobei die Downlink-Steuerinformationen Ressourceninformationen eines Datenkanals, erste Anzeigeinformationen und zweite Anzeigeinformationen umfassen, wobei die ersten Anzeigeinformationen einen Leistungsversatzwert zwischen einem Übertragungszeitintervall k und einem Übertragungszeitintervall k-1 anzeigen, und die zweiten Anzeigeinformationen verwendet werden, um einen Leistungseinstellwert in dem Übertragungszeitintervall k zu bestimmen; und
einen Prozessor (710), der konfiguriert ist, um Übertragungsleistung in dem Übertragungszeitintervall k basierend auf dem Leistungsversatzwert und dem Leistungseinstellwert zu bestimmen (S420, S504, S604, S704), wobei
der Sendeempfänger (730) ferner konfiguriert ist, um Uplink-Steuerinformationen in dem Übertragungszeitintervall k basierend auf der Übertragungsleistung zu übertragen (S430, S505, S605, S705), wobei die Uplink-Steuerinformationen Rückkopplungsinformationen für den Datenkanal umfassen, und wenn die Rückkopplungsinformationen eine negative Bestätigung (NACK) sind, die Übertragungsleistung basierend auf dem Leistungsversatzwert und dem Leistungseinstellwert bestimmt wird, oder wenn die Rückkopplungsinformationen eine Bestätigung (ACK) sind, die Übertragungsleistung basierend auf dem Leistungsversatzwert bestimmt wird;
wobei die zweiten Anzeigeinformationen Anzeigeinformationen einer Zuverlässigkeitsanforderung, einer verbleibenden Neuübertragungsmenge oder einer ersten Kombination einer Zuverlässigkeitsanforderung und einer verbleibenden Neuübertragungsmenge sind;
wobei vor dem Bestimmen (S420, S604, S704) von Übertragungsleistung in dem Übertragungszeitintervall k basierend auf dem Leistungsversatzwert und dem Leistungseinstellwert, der Prozessor (710) ferner konfiguriert ist zum:
Bestimmen (S603, S703) des Leistungseinstellwerts basierend auf den zweiten Anzeigeinformationen.

3. Verfahren (400) zum Empfangen von Uplink-Steuerinformationen in einem Long-Term-Evolution(LTE)-Kommunikationssystem oder einem Kommunikationssystem der Fünften Generation (5G), umfassend:

Übertragen (S410), durch eine Netzwerkvorrichtung (101, 600), von Downlink-Steuerinformationen, wobei die Downlink-Steuerinformationen Ressourceninformationen eines Downlink-Datenkanals, erste Anzeigeinformationen und zweite Anzeigeinformationen umfassen, wobei die ersten Anzeigeinformationen einen Leistungsversatzwert eines Endgeräts (102, 103, 700) zwischen einem Übertragungszeitintervall k und einem Übertragungszeitintervall k-1 anzeigen, und die zweiten Anzeigeinformationen verwendet werden, um einen Leistungseinstellwert des Endgeräts in dem Übertragungszeitintervall k zu bestimmen; und

Empfangen (S430, S505, S605, S705), durch die Netzwerkvorrichtung (101, 600), von Uplink-Steuerinformationen in dem Übertragungszeitintervall k, wobei die Uplink-Steuerinformationen Rückkopplungsinformationen für den Downlink-Datenkanal umfassen, wobei die Uplink-Steuerinformationen durch das Endgerät (102, 103, 700) mit einer ersten Übertragungsleistung gesendet werden, und wenn die Rückkopplungsinformationen eine negative Bestätigung (NACK) sind, die erste Übertragungsleistung durch das Endgerät basierend auf dem Leistungsversatzwert und dem Leistungseinstellwert bestimmt wird, oder wenn die Rückkopplungsinformationen eine Bestätigung (ACK) sind, die erste Übertragungsleistung durch das Endgerät basierend auf dem Leistungsversatzwert bestimmt wird;

wobei die zweiten Anzeigeinformationen Anzeigeinformationen einer Zuverlässigkeitsanforderung, einer verbleibenden Neuübertragungsmenge oder einer ersten Kombination einer Zuverlässigkeitsanforderung und einer verbleibenden Neuübertragungsmenge sind.

4. Netzwerkvorrichtung (101, 600), umfassend einen Prozessor (610) und einen Sendeempfänger (630), wobei

der Sendeempfänger (630), konfiguriert ist, um Downlink-Steuerinformationen in einem Long-Term-Evolution(LTE)-Kommunikationssystem oder einem Kommunikationssystem der Fünften Generation (5G) zu übertragen (S410), wobei die Downlink-Steuerinformationen Ressourceninformationen eines Downlink-Datenkanals, erste Anzeigeinformationen, und zweite Anzeigeinformationen umfassen, wobei die ersten Anzeigeinformationen einen Leistungsversatzwert eines Endgeräts (102, 103, 700) zwischen einem Übertragungszeitintervall k und einem Übertragungszeitintervall k-1 anzeigen, und die zweiten Anzeigeinformationen verwendet werden, um einen Leistungseinstellwert des Endgeräts in dem Übertragungszeitintervall k zu bestimmen; und

der Sendeempfänger (630) ferner konfiguriert ist, um Uplink-Steuerinformationen in dem Übertragungszeitintervall k zu empfangen, wobei die Uplink-Steuerinformationen Rückkopplungsinformationen für den Downlink-Datenkanal umfassen, wobei die Uplink-Steuerinformationen durch das Endgerät (102, 103, 700) mit einer ersten Übertragungsleistung gesendet werden, und wenn die Rückkopplungsinformationen eine negative Bestätigung (NACK) sind, die erste Übertragungsleistung durch das Endgerät basierend auf dem Leistungsversatzwert und dem Leistungseinstellwert bestimmt wird, oder wenn die Rückkopplungsinformationen eine Bestätigung (ACK) sind, die erste Übertragungsleistung durch das Endgerät basierend auf dem Leistungsversatzwert bestimmt wird;

wobei die zweiten Anzeigeinformationen Anzeigeinformationen einer Zuverlässigkeitsanforderung, einer verbleibenden Neuübertragungsmenge oder einer ersten Kombination einer Zuverlässigkeitsanforderung und einer verbleibenden Neuübertragungsmenge sind.

5. Computerlesbares Speichermedium, wobei das computerlesbare Speichermedium eine Anweisung speichert, und die Anweisung verwendet wird, um das Verfahren nach Anspruch 1 durchzuführen.

6. Computerlesbares Speichermedium, wobei das computerlesbare Speichermedium eine Anweisung speichert, und die Anweisung verwendet wird, um das Verfahren nach Anspruch 3 durchzuführen.

## Revendications

1. Procédé (400) destiné à transmettre des informations de commande de liaison montante dans un système de communication de technique d'évolution à long terme, LTE ou de cinquième génération, 5G, comprenant :

la réception (S410), par un dispositif terminal (102, 103, 700), d'informations de commande de liaison descendante, les informations de commande de liaison descendante comprenant des informations de ressource d'un canal de données, des premières informations d'indication et des secondes informations d'indication, les premières informations d'indication indiquant une valeur de décalage de puissance entre un intervalle de temps de transmission k et un intervalle de temps de transmission k-1, et les secondes informations d'indication étant utilisées pour déterminer une valeur de réglage de puissance dans l'intervalle de temps de transmission k ;
la détermination (S420, S504, S604, S704), par le dispositif terminal (102, 103, 700), de la puissance d'émission dans l'intervalle de temps de transmission k sur la base de la valeur de décalage de puissance et de la valeur de réglage de puissance ; et

la transmission (S430, S505, S605, S705), par le dispositif terminal (102, 103, 700), d'informations de commande de liaison montante dans l'intervalle de temps de transmission k sur la base de la puissance d'émission, les informations de commande de liaison montante comprenant des informations de rétroaction pour le canal de données, et lorsque les informations de rétroaction sont un accusé de réception négatif NACK, la puissance d'émission étant déterminée sur la base de la valeur de décalage de puissance et de la valeur de réglage de puissance, ou lorsque les informations de rétroaction sont un accusé de réception ACK, la puissance d'émission étant déterminée sur la base de la valeur de décalage de puissance ;

les secondes informations d'indication étant des informations d'indication d'une exigence de fiabilité, d'une quantité de retransmission restante ou d'une première combinaison d'une exigence de fiabilité et d'une quantité de retransmission restante ; et

avant la détermination (S420, S604, S704), par le dispositif terminal (102, 103, 700), de la puissance d'émission dans l'intervalle de temps de transmission k sur la base de la valeur de décalage de puissance et de la valeur de réglage de puissance, le procédé comprend en outre :

la détermination (S603, S703), par le dispositif terminal (102, 103, 700), de la valeur de réglage de puissance sur la base des secondes informations d'indication.

2.  Dispositif terminal (102, 103, 700), comprenant :

un émetteur-récepteur (730), configuré pour recevoir (S410) des informations de commande de liaison descendante dans un système de communication de technologie d'évolution à long terme, LTE, ou de cinquième génération, 5G, les informations de commande de liaison descendante comprenant des informations de ressource d'un canal de données, des informations de première indication et des secondes informations d'indication, les premières informations d'indication indiquant une valeur de décalage de puissance entre un intervalle de temps de transmission k et un intervalle de temps de transmission k-1, et les secondes informations d'indication étant utilisées pour déterminer une valeur de réglage de puissance dans l'intervalle de temps de transmission k ; et

un processeur (710), configuré pour déterminer (S420, S504, S604, S704) la puissance d'émission dans l'intervalle de temps de transmission k sur la base de la valeur de décalage de puissance et de la valeur de réglage de puissance,

l'émetteur-récepteur (730) étant en outre configuré pour transmettre (S430, S505, S605, S705) des informations de commande de liaison montante dans l'intervalle de temps de transmission k sur la base de la puissance d'émission, les informations de commande de liaison montante comprenant des informations de rétroaction pour le canal de données, et lorsque le les informations de rétroaction sont un accusé de réception négatif NACK, la puissance d'émission étant déterminée sur la base de la valeur de décalage de puissance et de la valeur de réglage de puissance, ou lorsque les informations de rétroaction sont un accusé de réception ACK, la puissance d'émission étant déterminée sur la base de la valeur de décalage de puissance ;

les secondes informations d'indication étant des informations d'indication d'une exigence de fiabilité, d'une quantité de retransmission restante ou d'une première combinaison d'une exigence de fiabilité et d'une quantité de retransmission restante ;

avant la détermination (S420, S604, S704) de la puissance d'émission dans l'intervalle de temps de transmission k sur la base de la valeur de décalage de puissance et de la valeur de réglage de puissance, le processeur (710) étant en outre configuré pour :

déterminer (S603, S703) la valeur de réglage de puissance sur la base des secondes informations d'indication.

3.  Procédé (400) pour recevoir des informations de commande de liaison montante dans un système de communication de technologie d'évolution à long terme, LTE ou de cinquième génération, 5G, comprenant :

la transmission (S410), par un dispositif réseau (101, 600), d'informations de commande de liaison descendante, les informations de commande de liaison descendante comprenant des informations de ressource d'un canal de données de liaison descendante, des premières informations d'indication et des secondes informations d'indication, les premières informations d'indication indiquant un décalage de puissance valeur d'un dispositif terminal (102, 103, 700) entre un intervalle de temps de transmission k et un intervalle de temps de transmission k-1, et les secondes informations d'indication étant utilisées pour déterminer une valeur de réglage de puissance du dispositif terminal dans l'intervalle de temps de transmission k ; et

la réception (S430, S505, S605, S705), par le dispositif réseau (101, 600), d'informations de commande de liaison montante dans l'intervalle de temps de transmission k, les informations de commande de liaison montante comprenant des informations de rétroaction pour le canal de données de liaison descendante, les informations de commande de liaison montante étant envoyée par le dispositif terminal (102, 103, 700) à la première puissance d'émission, et lorsque les informations de rétroaction sont un accusé de réception négatif NACK, la première puissance d'émission étant déterminée par le dispositif terminal sur la base de la valeur de décalage de puissance et de la valeur de réglage de puissance, ou lorsque les informations de rétroaction sont un accusé de réception ACK, la première puissance d'émission étant déterminée par le dispositif terminal sur la base de la valeur de décalage de puissance ;

les secondes informations d'indication étant des informations d'indication d'une exigence de fiabilité, d'une quantité de retransmission restante ou d'une première combinaison d'une exigence de fiabilité et d'une quantité de retransmission restante.

4. Dispositif de réseau (101, 600), comprenant un processeur (610) et un émetteur-récepteur (630),

l'émetteur-récepteur (630) étant configuré pour transmettre (S410) des informations de commande de liaison descendante dans un système de communication de technologie d'évolution à long terme, LTE ou de cinquième génération, 5G, les informations de commande de liaison descendante comprenant des informations de ressource d'un canal de données de liaison descendante, des premières informations d'indication, et des secondes informations d'indication, les premières informations d'indication indiquant une valeur de décalage de puissance d'un dispositif terminal (102, 103, 700) entre un intervalle de temps de transmission k et un intervalle de temps de transmission k-1, et les secondes informations d'indication étant utilisées pour déterminer une valeur de réglage de puissance du dispositif terminal dans l'intervalle de temps de transmission k ; et

l'émetteur-récepteur (630) étant en outre configuré pour recevoir des informations de commande de liaison montante dans l'intervalle de temps de transmission k, les informations de commande de liaison montante comprenant des informations de rétroaction pour le canal de données de liaison descendante, les informations de commande de liaison montante étant envoyées par le dispositif terminal (102, 103, 700) à la première puissance d'émission, et lorsque les informations de rétroaction étant un accusé de réception négatif NACK, la première puissance d'émission étant déterminée par le dispositif terminal sur la base de la valeur de décalage de puissance et de la valeur de réglage de puissance, ou lorsque les informations de rétroaction étant un accusé de réception ACK, la première puissance d'émission étant déterminée par le dispositif terminal sur la base de la valeur de décalage de puissance ;

les secondes informations d'indication étant des informations d'indication d'une exigence de fiabilité, d'une quantité de retransmission restante ou d'une première combinaison d'une exigence de fiabilité et d'une quantité de retransmission restante.

5. Support de stockage lisible par ordinateur, dans lequel le support de stockage lisible par ordinateur stocke une instruction, et l'instruction est utilisée pour effectuer le procédé selon la revendication 1.

6. Support de stockage lisible par ordinateur, dans lequel le support de stockage lisible par ordinateur stocke une instruction, et l'instruction est utilisée pour effectuer le procédé selon la revendication 3.

FIG. 1

FIG. 2

FIG. 3

Network device

Terminal device 400

S410

Downlink control information

including resource information of a data channel, first indication information, and second indication information

S420

Determine transmit power

S430

Uplink control information

FIG. 4

FIG. 5

Network device

Terminal device

S601

Predefine a reliability requirement or configure a reliability requirement by using higher layer signaling

PUCCH retransmission quantity indication information, and

S602

remaining retransmission quantity K

S603 — Determine a power adjustment value

S604 — Determine transmit power

S605

Uplink control Information

FIG. 6

Network
device

Terminal
device

S701

Configure at least two combinations by
using higher layer signaling

PUCCH retransmission quantity indication
information, and

an index of a combination of a
reliability requirement and a
remaining retransmission quantity

S702

S703

Determine a
power adjustment
value

S704

Determine
transmit power

S705

Uplink control information

FIG. 7

FIG. 8

**EP 3 654 566 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150036668 A1